# EUROPÄISCHE PATENTANMELDUNG

(11) **EP 3 023 656 A1**
(43) Veröffentlichungstag der Anmeldung: **25.05.2016**
(21) Anmeldenummer: 15191646.7
(22) Anmeldetag: 27.10.2015
(51) Int. Cl.: F16C 33/46, F16C 33/34, F16C 41/04

(54) **WÄLZLAGER UND VERFAHREN ZUM BESTÜCKEN EINES KÄFIGS EINES WÄLZLAGERS MIT WÄLZKÖRPERN**

(30) Priorität: 20.11.2014 DE 102014223754
(71) Anmelder: Aktiebolaget SKF, 41 550 Göteborg (SE)
(72) Erfinder: von Schleinitz, Thilo, 97422 Schweinfurt (DE)
(74) Vertreter: Kuhstrebe, Jochen

(57) **Zusammenfassung**

Die Erfindung betrifft ein Wälzlager mit einem Käfig (4) und mit Wälzkörpern (3). Die Wälzkörper (3) weisen jeweils eine Mantelfläche auf, die sich axial zwischen zwei axialen Endflächen (9) erstreckt. Im Bereich wenigstens einer axialen Endfläche (9) ist eine Mulde (10) ausgebildet. Am Käfig (4) sind Spreizniete (13) befestigt, die sich jeweils in eine der Mulden (10) der Wälzkörper (3) erstrecken.

## Beschreibung

Die Erfindung betrifft ein Wälzlager und ein Verfahren zum Bestücken eines Käfigs eines Wälzlagers mit Wälzkörpern.

Ein Wälzlager kann beispielsweise so ausgebildet sein, dass es einen Innenring, einen Außenring und Wälzkörper aufweist, die zwischen dem Innenring und dem Außenring abrollen. In vielen Fällen sind die Wälzkörper in einem Käfig angeordnet. Je nach Bauform eines Wälzlagers gibt es eine Reihe von Möglichkeiten dieses zusammenzubauen. Bei vielen Bauformen von Wälzlagern, die einen Käfig aufweisen, kann der Zusammenbau so erfolgen, dass die Wälzkörper in den Käfig eingesetzt werden und der mit den Wälzkörpern bestückte Käfig dann auf einen Innenring aufgeschoben und/oder in einen Außenring eingeführt wird. Falls die Belastung des Käfigs durch das Gewicht der Wälzkörper zu groß ist, kann beispielsweise so vorgegangen werden, dass der Käfig vor der Bestückung auf den Innenring aufgeschoben oder in den Außenring eingeführt wird. Es wird meist mit vertikaler Achse montiert.

Bei der Bestückung des Käfigs mit Wälzkörpern besteht weiterhin das Problem, dass die Wälzkörper wieder aus dem Käfig herausfallen können, solange das Wälzlager nicht vollständig zusammengebaut ist. Dies kann beispielsweise dadurch verhindert werden, dass der Käfig die Wälzkörper verliersicher umschließt. Für die Bestückung ist dann aber eine temporäre Verformung des Käfigs erforderlich (Schnappkäfig). Gelegentlich werden auch massive Rollenachsen durch hohlgebohrte Rollen gesteckt und beidseits verschraubt oder verschweißt. Diese Lösung ist zur Aufnahme von Führungskräften über die Achse bestimmt und hat einen hohen Herstellaufwand und ein hohes Gewicht.

Der Erfindung liegt die Aufgabe zugrunde, mit möglichst wenig Aufwand eine effiziente Bestückung eines Käfigs eines Wälzlagers mit Wälzkörpern zu ermöglichen, wenn keine Führung der Wälzkörper über Achsen vorgesehen ist.

Diese Aufgabe wird durch die Merkmalskombinationen der nebengeordneten Ansprüche gelöst.

Die Erfindung betrifft ein Wälzlager mit einem Käfig und mit Wälzkörpern. Die Wälzkörper weisen jeweils eine Mantelfläche auf, die sich axial zwischen zwei axialen Endflächen erstreckt. Im Bereich wenigstens einer axialen Endfläche ist eine Mulde ausgebildet. Am Käfig sind Spreizniete befestigt, die sich jeweils in eine der Mulden der Wälzkörper erstrecken.

Die Erfindung hat den Vorteil, dass mit wenig Aufwand eine effiziente Bestückung des Käfigs möglich ist. Die Spreizniete lassen sich sehr schnell und leicht am Käfig anbringen und sichern die Wälzkörper gegen Herausfallen. Auch nach einer sehr langen Betriebsdauer des Wälzlagers lösen sich die Spreizniete nicht, sondern sind dauerhaft mit dem Käfig verbunden.

Der Käfig kann aus einem Stück oder aus mehreren Segmenten bestehen. Insbesondere kann der Käfig aus Stahl hergestellt sein. Der Käfig ist vorzugsweise manganphosphatiert.

Die Spreizniete können formschlüssig am Käfig fixiert sein. Die formschlüssige Verbindung ist sehr zuverlässig und dauerhaft.

Die Spreizniete können jeweils eine Hülse und einen in die Hülse eingeführten Stift aufweisen. Die Hülse und/oder der Stift können im Bereich eines axialen Endes wenigstens einen axial verlaufenden Schlitz und/oder bereichsweise einen größeren Außendurchmesser aufweisen. Im Bereich des anderen axialen Endes können die Hülse und/oder der Stift bereichsweise einen größeren Außendurchmesser aufweisen.

Beide axialen Endflächen der Wälzkörper können jeweils eine Mulde aufweisen. In die eine Mulde kann sich ein Spreizniet und in die andere Mulde ein Spreizniet oder ein Vorsprung des Käfigs erstrecken. Die Variante mit je zwei Spreiznieten pro Wälzkörper hat den Vorteil, dass sich die Wälzkörper sehr leicht in den Käfig einfügen lassen und auf beiden Seiten auf die gleiche Weise gehalten werden. Die Variante mit je einem Spreizniet und einem Vorsprung hat den Vorteil, dass die Hälfte der Spreizniete eingespart werden kann und dadurch der Material- und Montageaufwand besonders gering ist.

Die Spreizniete können relativ zu den Wälzkörpern so angeordnet sein, dass es zwischen den Spreiznieten und den Wälzkörpern nicht zu einem berührenden Kontakt kommt. Dies bedeutet, dass die Spreizniete als Montage- und Demontagehilfe eingesetzt werden können und während des Betriebs des Wälzlagers ohne Funktion sein können. Dadurch kann ein Verschleiß oder gar eine Zerstörung der Spreizniete verhindert und eine Verunreinigung des Wälzlagers mit Materialabrieb vermieden werden. Zudem können die Spreizniete relativ zu den Achsen der Wälzkörper versetzt angeordnet sein, so dass sie nicht mit den Achsen der Wälzkörper fluchten. Weiterhin kann vorgesehen sein, dass es zwischen den Wälzkörpern und dem Käfig zu einem berührenden Kontakt kommt. Insbesondere kann der Käfig von den Wälzkörpern geführt werden.

Die Spreizniete können aus einem Kunststoffmaterial gefertigt sein. Dadurch können die Kosten niedrig gehalten werden und nahezu beliebig gestaltete Spreizniete zum Einsatz kommen. Außerdem kann das Risiko einer Schädigung des Wälzlagers gering gehalten werden, falls Material von den Spreiznieten abgetragen wird und in das Wälzlager gelangt. Die Spreizniete können beispielsweise aus Polyamid 6.6 oder aus Polyetheretherketon gefertigt sein. Diese Kunststoffe sind besonders robust und schmierstoffbeständig.

Die Erfindung betrifft weiterhin eine Windkraftanlage mit einem erfindungsgemäßen Wälzlager.

Außerdem betrifft die Erfindung ein Verfahren zum Bestücken eines Käfigs eines Wälzlagers mit Wälzkörpern. Beim erfindungsgemäßen Verfahren werden die Wälzkörper jeweils in den Käfig eingesetzt und dann mittels wenigstens eines Spreizniets pro Wälzkörper gegen Herausfallen gesichert.

Die Spreizniete können jeweils in eine Durchgangsbohrung im Käfig eingeführt werden.

Die Spreizniete können jeweils eine Hülse aufweisen, in die ein Stift eingeführt ist. Die Hülse kann mit partiell eingeführtem Stift in die Durchgangsbohrung eingeführt werden und dann der Stift weiter in die Hülse eingeführt werden.

Die Spreizniete können durch Eindrücken in die Durchgangsbohrung fixiert werden.

Auf diese Weise können die Spreizniete mit wenig Aufwand in einer kontinuierlichen Bewegung am Käfig befestigt werden.

Die Erfindung wird nachstehend anhand der in der Zeichnung dargestellten Ausführungsbeispiele erläutert.

Es zeigen:
- Figur 1: eine Teildarstellung eines Ausführungsbeispiels eines erfindungsgemäß ausgebildeten Wälzlagers in einer schematischen Seitenansicht,
- Figur 2: eine Teildarstellung eines Ausführungsbeispiels des partiell mit Wälzkörpern bestückten Käfigs in einer perspektivischen Ansicht,
- Figur 3: eine Teildarstellung eines weiteren Ausführungsbeispiels des partiell mit Wälzkörpern bestückten Käfigs in einer perspektivischen Ansicht,
- Figur 4: ein Ausführungsbeispiel einer Komponente des Spreizniets in Schnittdarstellung,
- Figur 5: ein Ausführungsbeispiel einer weiteren Komponente des Spreizniets in Schnittdarstellung,
- Figur 6: ein Ausführungsbeispiel eines vormontierten Spreizniets in Schnittdarstellung,
- Figur 7: den Seitenring im Bereich der Durchgangsbohrung zu einem ersten Zeitpunkt während des Einführens des Spreizniets in Schnittdarstellung,
- Figur 8: den Seitenring im Bereich der Durchgangsbohrung zu einem zweiten Zeitpunkt während des Einführens des Spreizniets in Schnittdarstellung und
- Figur 9: den Seitenring im Bereich der Durchgangsbohrung mit vollständig eingeführtem Spreizniet in Schnittdarstellung.

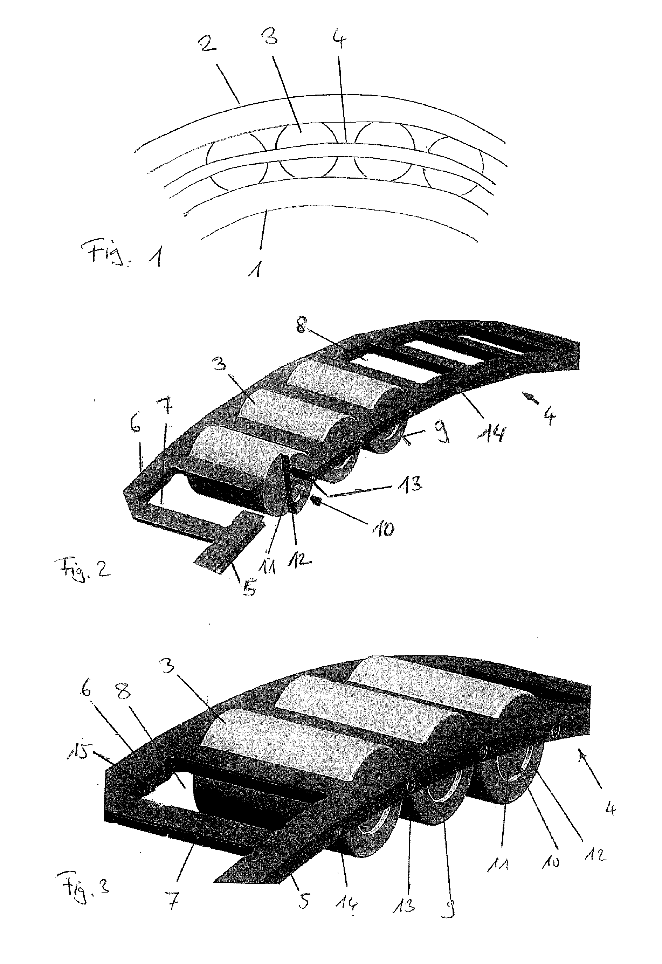

Figur 1 zeigt eine Teildarstellung eines Ausführungsbeispiels eines erfindungsgemäß ausgebildeten Wälzlagers in einer schematischen Seitenansicht. Das Wälzlager kann beispielsweise als ein Kegelrollenlager oder als ein Zylinderrollenlager ausgebildet sein. Insbesondere kann das Wälzlager bei einer Windkraftanlage zum Einsatz kommen. Andere Einsatzgebiete sind aber ebenfalls möglich. Das Wälzlager weist einen Innenring 1, einen Außenring 2 und Wälzkörper 3 auf. Die Wälzkörper 3 sind in einem Käfig 4 geführt und rollen zwischen dem Innenring 1 und dem Außenring 2 ab.

Figur 2 zeigt eine Teildarstellung eines Ausführungsbeispiels des partiell mit Wälzkörpern 3 bestückten Käfigs 4 in einer perspektivischen Ansicht. Der Käfig 4 ist als ein Taschenkäfig ausgebildet und kann in zwei Seitenringe 5, 6 und Stege 7, welche die beiden Seitenringe 5, 6 miteinander verbinden, untergliedert werden. Die beiden Seitenringe 5, 6 und je zwei in Umfangsrichtung aufeinander folgende Stege 7 begrenzen je eine Tasche 8. In jeder Tasche 8 ist je ein Wälzkörper 3 angeordnet.

Die Wälzkörper 3 weisen im Bereich ihrer beiden axialen Endflächen 9 je eine Mulde 10 mit einem Muldenboden 11 und einen den Muldenboden 11 umgebenden Muldenrand 12 auf. In jede Mulde 10 greift ein Spreizniet 13 ein, der aus einer Durchgangsbohrung 14 im Seitenring 5 bzw. 6 in Richtung Wälzkörper 3 herausragt. Die Ausbildung der Mulde 10 und die Anordnung des Spreizniets 13 können so aufeinander abgestimmt sein, dass der Spreizniet 13 im fertig zusammengebauten Zustand des Wälzlagers weder den Muldenboden 11 noch den Muldenrand 12 berührt. Im zusammengebauten Zustand und insbesondere im Betriebszustand des Wälzlagers haben die Spreizniete 13 somit keine Wirkung. Wie im Folgenden noch näher erläutert wird, besteht die Funktionsweise der Spreizniete 13 darin, die Wälzkörper 3 verliersicher am Käfig 4 zu fixieren. Dies ist insbesondere beim Zusammenbau des Wälzlagers von Bedeutung, bevor der Käfig 4 zwischen dem Innenring 1 und dem Außenring 2 angeordnet ist. Ohne weitere Maßnahmen würden die Wälzkörper 3 nach dem Bestücken des Käfigs 4 wieder aus den Taschen 8 des Käfigs 4 herausfallen. Wie dies mit Hilfe der Spreizniete 13 verhindert wird und wie die Spreizniete 13 aufgebaut sind, wird im Folgenden näher erläutert. Die Sicherungsfunktion der Spreizniete 13 ist auch bei der Demontage des Wälzlagers und zu Inspektionszwecken von Bedeutung.

Figur 3 zeigt eine Teildarstellung eines weiteren Ausführungsbeispiels des partiell mit Wälzkörpern 3 bestückten Käfigs 4 in einer perspektivischen Ansicht.

Das in Figur 3 dargestellte Ausführungsbeispiel entspricht weitgehend dem Ausführungsbeispiel der Figur 2. Ein Unterschied besteht lediglich dahingehend, dass beim Ausführungsbeispiel der Figur 3 lediglich der Seitenring 5 Durchgangsbohrungen 14 aufweist. Der Seitenring 6 weist keine Durchgangsbohrungen 14 auf und ist demgemäß auch nicht mit Spreiznieten 13 bestückt. Stattdessen weist der Seitenring 6 im Bereich jeder Tasche 8 je einen Vorsprung 15 auf. Die Vorsprünge 15 sind jeweils an den Umfangspositionen des Seitenrings 6 angeordnet, an denen beim Ausführungsbeispiel der Figur 2 die Durchgangsbohrungen 14 ausgebildet sind. Die Vorsprünge 15 greifen jeweils in eine Mulde 10 eines Wälzkörpers 3 ein und erfüllen die gleiche Funktion wie die Spreizniete 13, d. h. sie sichern die Wälzkörper 3 vor dem Herausfallen aus den Taschen 8. Demgemäß berühren die Vorsprünge 15 im fertig montierten Zustand des Wälzlagers jeweils weder den Muldenboden 11 noch den Muldenrand 12.

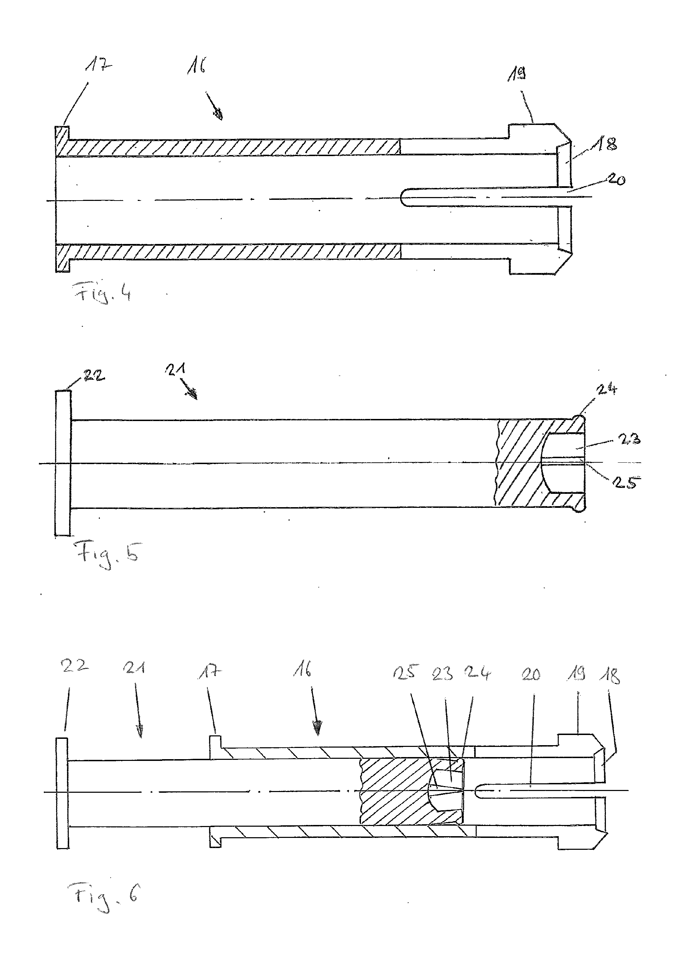

Figur 4 zeigt ein Ausführungsbeispiel einer Komponente des Spreizniets 13 in Schnittdarstellung. Bei der dargestellten Komponente handelt es sich um eine Hülse 16.

Die Hülse 16 kann aus Metall oder Kunststoff gefertigt sein. Beispielsweise kann die Hülse 16 aus Polyamid 6.6 oder aus Polyetheretherketon gefertigte sein. Im Bereich eines ersten axialen Endes weist die Hülse 16 einen Anschlagbund 17 auf, der als ein radial nach außen überstehender Flansch ausgebildet ist. Im Bereich eines zweiten axialen Endes weist die Hülse 16 eine Kegelsenkung 18 auf. Ausgehend von diesem zweiten axialen Ende erstreckt sich eine radial nach außen überstehende Verdickung 19 über einen Teilbereich der Länge der Hülse 16. Außerdem erstrecken sich ausgehend vom zweiten axialen Ende beispielsweise vier axial verlaufende Schlitze 20 über einen Teilbereich der Länge der Hülse 16. Dabei ist die axiale Erstreckung der Schlitze 20 größer als die axiale Erstreckung der Verdickung 19.

Figur 5 zeigt ein Ausführungsbeispiel einer weiteren Komponente des Spreizniets 13 in Schnittdarstellung. Bei der in Figur 5 dargestellten Komponente handelt es sich um einen Stift 21. Der Stift 21 kann als ein Vollzylinder ausgebildet sein und im Bereich eines ersten axialen Endes einen radial nach außen überstehenden Kragen 22 aufweisen. Im Bereich eines zweiten axialen Endes ist eine Sacklochbohrung 23 ausgebildet. Weiterhin weist der Stift 21 im Bereich des zweiten axialen Endes einen auf seiner Mantelfläche umlaufenden Wulst 24 auf. Ausgehend vom zweiten axialen Ende des Stifts 21 erstreckt sich ein Schlitz 25 in Axialrichtung. Die axiale Erstreckung des Schlitzes 25 entspricht ungefähr der radialen Erstreckung der Sacklochbohrung 23. Der Stift 21 kann aus dem gleichen Material wie die Hülse 16 gefertigt sein.

Beim Bestücken des in Figur 2 dargestellten Ausführungsbeispiels des Käfigs 4 mit den Wälzkörpern 3 kann folgendermaßen vorgegangen werden:

Zunächst wird ein Wälzkörper 3 in einer der Taschen 8 angeordnet. Hierfür kann der Käfig 4 zuvor in ein für sich bekanntes Werkzeug eingespannt werden. Der Wälzkörper 3 wird so in der Tasche 8 angeordnet, dass die Mulden 10 des Wälzkörpers 3 den Durchgangsbohrungen 14 in den Seitenringen 5 und 6 gegenüberliegen.

Zum verliersicheren Fixieren des Wälzkörpers 3 in der Tasche 8 des Käfigs 4 wird in die Durchgangsbohrungen 14 in den Seitenringen 5, 6 je ein Spreizniet 13 eingeführt und am Seitenring 5, 6 fixiert. Vor dem Einführen wird der Spreizniet 13 in der in Figur 6 dargestellten Weise vormontiert.

Figur 6 zeigt ein Ausführungsbeispiel eines vormontierten Spreizniets 13 in Schnittdarstellung. Wie aus Figur 6 erkennbar, ist der Stift 21 partiell in die Hülse 16 eingeführt. Beim Einführen des Stiftes 21 in die Hülse 16 wird der Stift 21 im Bereich des Wulstes 24 radial gestaucht, da der Außendurchmesser des Wulstes 24 größer ist als der Innendurchmesser der Hülse 16. Das radiale Stauchen des Stiftes 21 ist problemlos möglich, da im Bereich des Wulstes 24 der Schlitz 25 ausgebildet ist.

Es ist nicht erforderlich, den Stift 21 genau bis zu der in Figur 16 dargestellten Position in die Hülse 16 einzuführen. Allerdings darf der Stift 21 nur so weit in die Hülse 16 eingeführt werden, dass der geschlitzte Bereich der Hülse 16 noch radial nach innen einfedern kann.

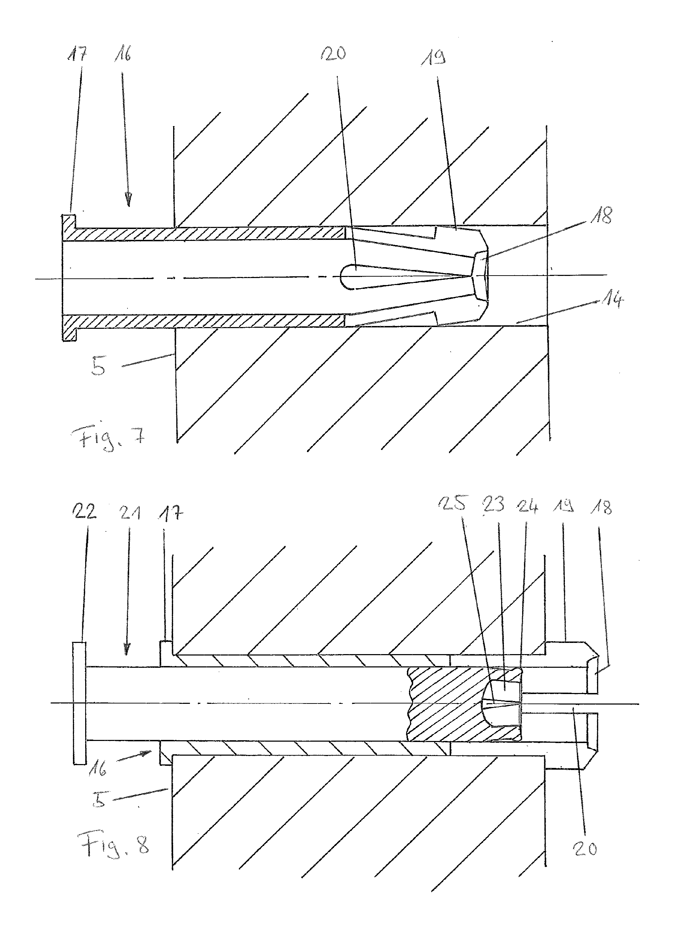

Der in Figur 6 dargestellte Spreizniet 13 wird in die Durchgangsbohrung 14 eingeführt, bis der Anschlagbund 17 am Seitenring 5, 6 anschlägt. Dies ist in Figur 7 dargestellt.

Figur 7 zeigt den Seitenring 5, 6 im Bereich der Durchgangsbohrung 14 zu einem ersten Zeitpunkt während des Einführens des Spreizniets 13 in Schnittdarstellung. Figur 8 zeigt den Seitenring 5, 6 im Bereich der Durchgangsbohrung 14 zu einem zweiten Zeitpunkt während des Einführens des Spreizniets 13 in Schnittdarstellung. Der zweite Zeitpunkt liegt im Verfahrensablauf nach dem ersten Zeitpunkt. Aus Gründen der Übersichtlichkeit ist in Figur 7 lediglich die Hülse 16, nicht jedoch der Stift 21 dargestellt. Tatsächlich befindet sich der Stift 21 aber während des gesamten Einführvorgangs innerhalb der Hülse 16.

Der Spreizniet 13 wird mit dem axialen Ende der Hülse 16 voran, an dem die Kegelsenkung 18 ausgebildet ist, in die Durchgangsbohrung 14 im Seitenring 5, 6 eingeführt. Das Einführen wird dadurch erleichtert, dass sich die Mantelfläche der Hülse 16 zu diesem axialen Ende hin konisch verjüngt. Beim Einführen des Spreizniets 13 in die Durchgangsbohrung 14 wird die Hülse 16 im Bereich der Schlitze 20 radial gestaucht, da die Hülse 16 im ungestauchten Zustand im Bereich der Verdickung 19 einen Außendurchmesser aufweist, der größer als der Durchmesser der Durchgangsbohrung 14 ist. Dies ist in Figur 7 dargestellt.

Die Hülse 16 wird soweit in die Durchgangsbohrung 14 eingeführt, bis sie mit ihrem Anschlagbund 17 am Seitenring 5, 6 des Käfigs 4 anschlägt. Kurz vor oder beim Anschlagen hat die Verdickung 19 der Hülse 16 die Durchgangsbohrung 14 passiert und tritt aus der Durchgangsbohrung 14 aus. In diesem Augenblick federt der gestauchte Bereich der Hülse 16 radial nach außen. Dadurch kommt die Verdickung 19 der Hülse 16, die einen größeren Außendurchmesser als den Durchmesser der Durchgangsbohrung 14 aufweist, mit dem Seitenring 5, 6 in Eingriff und sichert die Hülse 16 gegen ein Herausziehen aus der Durchgangsbohrung 14. Gleichzeitig verhindert der Anschlagbund 17 der Hülse 16 ein weiteres Vordringen der Hülse 16 in die Durchgangsbohrung 14. Somit ist die Hülse 16 axial in beide Richtungen in der Durchgangsbohrung 14 fixiert. Die Fixierung kann aufgehoben werden, indem man die Hülse 16 im Bereich der Verdickung 19 radial staucht.

Figur 8 zeigt eine Momentaufnahme zum zweiten Zeitpunkt, zu dem die Hülse 16 vollständig in die Durchgangsbohrung 14 eingeführt ist und mit ihrem Anschlagbund 17 am Seitenring 5, 6 des Käfigs 4 anschlägt. Der Stift 21 ist lediglich partiell in die Hülse 16 eingeführt, so dass der Kragen 22 des Stifts 21 noch vom Anschlagbund 17 der Hülse 16 entfernt ist.

Zur dauerhaften Fixierung des Spreizniets 13 in der Durchgangsbohrung 14 wird der Stift 21 weiter in die Hülse 16 eingeführt, bis der Kragen 22 des Stiftes 21 am Anschlagbund 17 der Hülse 16 anschlägt. Im Augenblick des Anschlagens oder unmittelbar davor tritt der Wulst 24 des Stiftes 21 vollständig in die Kegelsenkung 18 ein. Da die Bohrung der Hülse 16 im Bereich der Kegelsenkung 18 radial erweitert ist, federt der Wulst 24 des Stiftes 21 beim Eintritt in die Kegelsenkung 18 radial nach außen, so dass es zu einem formschlüssigen Eingriff mit der Hülse 16 kommt. Dieser Eingriff verhindert ein Herausziehen des Stiftes 21 aus der Hülse 16. Andererseits verhindert das Anschlagen des Kragens 22 an den Anschlagbund 17 ein weiteres Einführen des Stiftes 21 in die Hülse 16. Insgesamt ist der Stift 21 somit formschlüssig an der Hülse 16 fixiert.

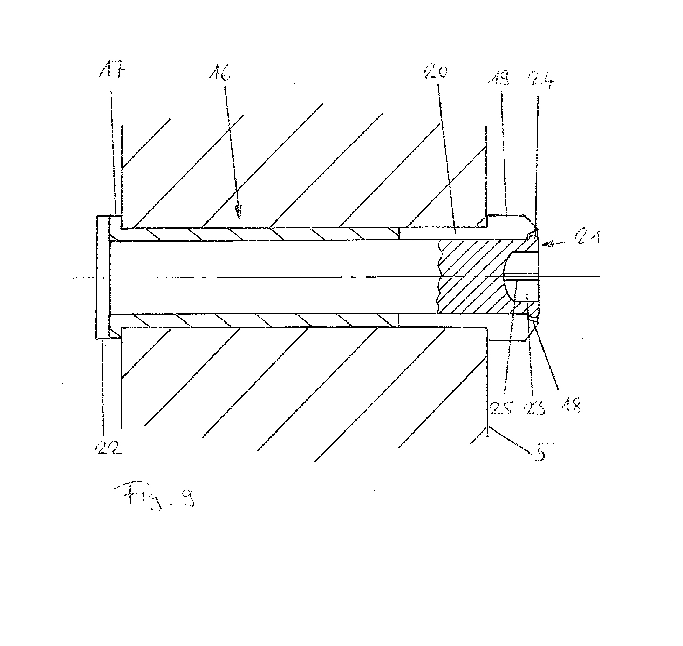

Figur 9 zeigt den Seitenring 5, 6 im Bereich der Durchgangsbohrung 14 mit vollständig eingeführtem Spreizniet 13 in Schnittdarstellung. Aus Figur 9 ist sowohl die formschlüssige Fixierung der Hülse 16 am Seitenring 5, 6 als auch die formschlüssige Fixierung des Stifts 21 an der Hülse 16 ersichtlich. Weiterhin ergibt sich aus Figur 9, dass der Stift 21 ein Lösen der formschlüssigen Fixierung der Hülse 16 am Seitenring 5, 6 verhindert, da der Stift 21 im Bereich der Verdickung 19 der Hülse 16 wenigstens partiell als Vollzylinder ausgeführt ist und somit ein Stauchen der Hülse 16 radial nach innen im Bereich der Verdickung 19 nicht möglich ist. Mit anderen Worten, ein nicht geschlitzter und nicht hohler und somit nicht federnder Abschnitt des Stifts 21 ragt nach der Montage aus der Durchgangsbohrung 14 des Käfigs 4 heraus und verhindert ein Lösen des Stifts 21 durch seitlichen Druck. Somit ist die Hülse 16 und folglich der gesamte Spreizniet 13 dauerhaft am Seitenring 5, 6 des Käfigs 4 fixiert.

Nach dem Fixieren am Seitenring 5, 6 ragt der Spreizniet 13 lediglich auf der dem Wälzkörper 3 zugewandten Seite aus der Durchgangsbohrung 14 heraus. Dabei ist er jedoch vorzugsweise gegenüber der Hülse 16 etwas zurückversetzt, um zu verhindern, dass der Stift 21 durch eine unbeabsichtigte äußere Einwirkung aus der Hülse 16 gepresst wird. Auf der vom Wälzkörper 3 abgewandten Seite schließt der Spreizniet 13 bündig mit dem Seitenring 5, 6 ab oder ist etwas zur Oberfläche des Seitenring 5, 6 zurückversetzt. Dies wird dadurch erreicht, dass die Durchgangsbohrung 14 in diesem Bereich derart radial erweitert ist, dass sie den Anschlagbund 17 der Hülse 16 und den Kragen 22 des Stiftes 21 aufnehmen kann. Vorzugsweise weisen der Anschlagbund 17 der Hülse 16 und der Kragen 22 des Stiftes 21 den gleichen Außendurchmesser auf.

Das Einführen des Spreizniets 13 in die Durchgangsbohrung 14 bis zur endgültigen Position kann in einer kontinuierlichen Bewegung erfolgen. Der Stift 21 dringt erst dann vollständig in die Hülse 16 ein, wenn diese vollständig in die Durchgangsbohrung 14 eingedrungen und eingeschnappt ist. Somit zeigt ein vollständig eingeführter Stift 21 eine ordnungsgemäße Montage des Spreizniets 13 an.

Im Falle des in Figur 3 dargestellten Ausführungsbeispiels des Käfigs 4 wird die vorstehend beschriebene Vorgehensweise geringfügig abgewandelt. Dabei wird zunächst der Wälzkörper 3 leicht schräg in eine der Taschen 8 des Käfigs 4 eingeführt und dabei eine der Mulden 10 des Wälzkörpers 3 über den benachbarten Vorsprung 15 des Seitenring 6 gestülpt. Dann wird der Wälzkörper 3 in der Tasche 8 des Käfigs 4 so ausgerichtet, dass seine andere Mulde 10 der Durchgangsbohrung 14 im Seitenring 5 gegenüberliegt. Danach wird in der bereits beschriebenen Weise ein Spreizniet 13 in der Durchgangsbohrung 14 im Seitenring 5 fixiert.

Bei einer Abwandlung des Spreizniets 13 ist die Hülse 16 im Bereich der Verdickung 19 radial nach innen gezogen, so dass die Verdickung 19 nicht radial über die Mantelfläche der Hülse 16 übersteht. Zudem verjüngt sich die Bohrung der Hülse 16 im Bereich der Verdickung 19. Dies hat zur Folge, dass die Verdickung 19 der Hülse 16 erst durch das Einführen des Stifts 21 mit dem Seitenring 5, 6 in Eingriff kommt. Eine weitere Eigenschaft dieser Abwandlung besteht darin, dass der Stift 21 durch die zurückfedernde Verdickung 19 der Hülse 16 geklemmt wird.

Der Spreizniet 13 kann auch so abgewandelt werden, dass der Stift 21 auf der vom Wälzkörper 3 abgewandten Seite des Seitenrings 5, 6 in die Hülse 16 einschnappt. Hierzu kann die Hülse 16 in diesem Bereich eine umlaufende Innennut aufweisen, in die eine korrespondierende radiale Ausbuchtung des Stiftes 21 einschnappt.

### Bezugszeichen

- 1: Innenring
- 2: Außenring
- 3: Wälzkörper
- 4: Käfig
- 5: Seitenring
- 6: Seitenring
- 7: Steg
- 8: Tasche
- 9: Axiale Endfläche
- 10: Mulde
- 11: Muldenboden
- 12: Muldenrand
- 13: Spreizniet
- 14: Durchgangsbohrung
- 15: Vorsprung
- 16: Hülse
- 17: Anschlagbund
- 18: Kegelsenkung
- 19: Verdickung
- 20: Schlitz
- 21: Stift
- 22: Kragen
- 23: Sacklochbohrung
- 24: Wulst
- 25: Schlitz

## Patentansprüche

1. Wälzlager mit einem Käfig (4) und mit Wälzkörpern (3), wobei
- die Wälzkörper (3) jeweils eine Mantelfläche aufweisen, die sich axial zwischen zwei axialen Endflächen (9) erstreckt und im Bereich wenigstens einer axialen Endfläche (9) eine Mulde (10) ausgebildet ist und
- am Käfig (4) Spreizniete (13) befestigt sind, die sich jeweils in eine der Mulden (10) der Wälzkörper (3) erstrecken.

2. Wälzlager nach Anspruch 1, wobei die Spreizniete (13) formschlüssig am Käfig (4) fixiert sind.

3. Wälzlager nach einem der vorhergehenden Ansprüche, wobei beide axialen Endflächen (9) der Wälzkörper (3) jeweils eine Mulde (10) aufweisen und wobei sich in die eine Mulde (10) ein Spreizniet (13) und in die andere Mulde (10) ein Spreizniet (13) oder ein Vorsprung (15) des Käfigs (4) erstrecken.

4. Wälzlager nach einem der vorhergehenden Ansprüche, wobei die Spreizniete (13) relativ zu den Wälzkörpern (3) so angeordnet sind, dass es zwischen den Spreiznieten (13) und den Wälzkörpern (3) nicht zu einem berührenden Kontakt kommt.

5. Wälzlager nach einem der vorhergehenden Ansprüche, wobei die Spreizniete (13) aus einem Kunststoffmaterial gefertigt sind.

6. Windkraftanlage mit einem Wälzlager nach einem der vorhergehenden Ansprüche.

7. Verfahren zum Bestücken eines Käfigs (4) eines Wälzlagers mit Wälzkörpern (3), wobei die Wälzkörper (3) jeweils in den Käfig (4) eingesetzt werden und dann mittels wenigstens eines Spreizniets (13) pro Wälzkörper (3) gegen Herausfallen gesichert werden.

8. Verfahren nach Anspruch 7, wobei die Spreizniete (13) jeweils in eine Durchgangsbohrung (14) im Käfig (4) eingeführt werden.

9. Verfahren nach Anspruch 8, wobei die Spreizniete (13) jeweils eine Hülse (16) aufweisen, in die ein Stift (21) eingeführt ist und die Hülse (16) mit partiell eingeführtem Stift (21) in die Durchgangsbohrung (14) eingeführt wird und dann der Stift (21) weiter in die Hülse (16) eingeführt wird.

10. Verfahren nach einem der Ansprüche 8 oder 9, wobei die Spreizniete (13) durch Eindrücken in die Durchgangsbohrung (14) fixiert werden.
